# EUROPÄISCHE PATENTSCHRIFT

(11) **EP 3 473 916 B1**
(45) Veröffentlichungstag und Bekanntmachung des Hinweises auf die Patenterteilung: **29.04.2020**
(21) Anmeldenummer: 18202000.8
(22) Anmeldetag: 23.10.2018
(51) Int. Cl.: F21S 8/06, F21V 1/14, F21V 8/00, F21V 15/01, F21V 21/30, F21Y 115/10, F21Y 113/20

(54) **LEUCHTE MIT BELEUCHTUNGSEINHEIT SOWIE EINER DIE BELEUCHTUNGSEINHEIT UMGEBENDEN ABDECKUNG**
LAMP WITH LIGHTING UNIT AND COVER SURROUNDING THE LIGHTING UNIT
LUMINAIRE POURVU D'UNITÉ D'ÉCLAIRAGE AINSI QU'UNE COUVERTURE ENTOURANT L'UNITÉ D'ÉCLAIRAGE

(30) Priorität: 23.10.2017 DE 202017106390 U; 04.12.2017 DE 202017107350 U
(43) Veröffentlichungstag der Anmeldung: 24.04.2019
(73) Patentinhaber: Zumtobel Lighting GmbH, 6850 Dornbirn (AT)
(72) Erfinder: Skergeth, Sascha, 6890 Lustenau (AT); Ocvirk, Markus, 6900 Bregenz (AT); König, Thomas, 88074 Meckenbeuren (DE)
(74) Vertreter: Thun, Clemens

(56) Entgegenhaltungen:
- EP-A1- 3 276 251
- EP-A2- 2 444 718
- WO-A1-2004/014102
- DE-A1- 19 514 365
- DE-A1-102008 017 271
- DE-A1-102011 003 105
- US-A1- 2012 294 035

## Beschreibung

Die vorliegende Erfindung betrifft eine Leuchte, die ein plattenförmiges Lichtleitelement sowie eine von dem Lichtleitelement gehaltene Beleuchtungseinheit aufweist, wobei über die Beleuchtungseinheit eine gerichtete Lichtabgabe erfolgen soll und das plattenförmige Lichtleitelement für eine zusätzliche diffuse Lichtabgabe genutzt wird.

Je nach Aufgabenstellung erfolgt in der Beleuchtungstechnologie die Abgabe von Licht in unterschiedlicher Weise. Ist beispielsweise gewünscht, dass optimale Beleuchtungsbedingungen zum Durchführen von Arbeiten oder zum Lesen vorliegen, so erfordert dies oftmals eine verhältnismäßig hohe Helligkeit in dem zu beleuchtenden Bereich. Ferner sollte die Lichtabgabe auch derart erfolgen, dass Blendeffekte und/oder störende Reflexionen an Bildschirmoberflächen oder dergleichen vermieden werden. Für eine derartige gerichtete Beleuchtung, die beispielsweise zum Beleuchten von Arbeitsplätzen genutzt wird, existieren auch entsprechende Normen.

Auf der anderen Seite ist oftmals auch eine eher großflächige Beleuchtung gewünscht, bei der das Licht eher diffus abgegeben wird, da dies für einen Beobachter optisch ansprechender ist. Hierbei können allerdings dann üblicherweise nicht unbedingt die hohen Leuchtdichten in einem zu beleuchtenden Bereich erzielt werden, die für ein Arbeiten oder Lesen optimal wären.

Wird Licht gerichtet abgegeben, so kommen mittlerweile oftmals LEDs als Lichtquellen zum Einsatz. Es handelt sich hierbei hinsichtlich ihrer Abmessungen um sehr kleine Lichtquellen, sodass auch die zugehörigen weiteren optischen Mittel in der Regel im Falle einer gerichteten Lichtabgabe eher geringe Dimensionen aufweisen. Oftmals ist deshalb erwünscht, derartige Mittel für die gerichtete Lichtabgabe in eine größere Leuchte zu integrieren, über die dann gegebenenfalls auch noch zusätzlich großflächig Licht abgegeben werden wird.

In diesem Zusammenhang ist aus der DE 10 2008 017 271 A1 eine Leuchte bekannt, welche ein flächiges Lichtleitelement aufweist, in welches einzelne Strahler integriert sind. Die Strahler sind hierbei für eine primäre gerichtet Lichtabgabe vorgesehen, wobei sie gleichzeitig auch Leuchtmittel aufweisen, deren Licht seitlich in das Lichtleitelement eingekoppelt wird, um durch dieses dann zusätzlich flächig abgestrahlt zu werden.

Ferner beschreibt die WO 2004/014102 A1 eine akustisch wirksame Beleuchtungsanordnung, bei der eine Beleuchtungseinheit von einem flexiblen Material überspannt wird, so dass ein großflächige, aus einem flexiblen Material bestehende Anordnung erzielt wird, deren Oberfläche schalldämpfend wirkt. Das flexible Material ist hierbei lichtdurchlässig gestaltet, wobei in von dem Material überspannte Hohlräume Lichteingestrahlt wird, welches flächig durch das Material abgegeben wird.

Schließlich zeigt die DE 10 2011 003 105 A1 eine Leuchte, welche eine komplex gekrümmte, dreidimensionale Aussenform aufweist. Das eine derartige Form schwer durch starre Element gebildet werden kann, sind kleinere Formgebungselemente vorgesehen, welche eine Grundstruktur der Leuchte definieren, wobei mit Hilfe eines an den Formgebungselementen befestigten Textilelements dann die endgültige Aussenhülle der Leuchte gebildet wird.

Der vorliegenden Erfindung liegt die Aufgabenstellung zugrunde, ausgehend von der DE 10 2008 017 271 A1 das Erscheinungsbild einer Leuchte zu verbessern, wobei eine Möglichkeit angegeben werden soll, Mittel für eine gerichtete Beleuchtung sowie zusätzlich für eine flächige, vorzugsweise diffuse Lichtabgabe gemeinsam in eine Leuchte zu integrieren, wobei die Mittel für die gerichtete Lichtabgabe harmonisch in das Erscheinungsbild der Leuchte eingebunden werden.

Die Aufgabe wird durch eine Leuchte, welche die Merkmale des Anspruchs 1 aufweist, gelöst. Vorteilhafte Weiterbildungen der Erfindung sind Gegenstand der abhängigen Ansprüche.

Der erfindungsgemäßen Lösung liegt der Gedanke zugrunde, als Basis für die Leuchte ein plattenförmiges Lichtleitelement zu verwenden, an dem zumindest eine zusätzliche Beleuchtungseinheit gehalten ist, die für eine gerichtete Lichtabgabe vorgesehen ist und hierfür eine entsprechende Lichtabstrahlöffnung aufweist. Zusätzlich sind Leuchtmittel vorgesehen, deren Licht in das Lichtleitelement eingekoppelt wird, wobei das Lichtleitelement zur Abgabe des Lichts über zumindest eine Flachseite ausgebildet ist. Die Lichtabstrahlöffhung der Beleuchtungseinheit für die Direktbeleuchtung wird nunmehr harmonisch in das Leuchtengehäuse integriert, indem eine Abdeckung der Leuchte durch eine Bespannung gebildet wird, welche aus einem zumindest teilweise lichtdurchlässigen, flexiblen Material besteht. Dieses ist erfindungsgemäß taschenartig gestaltet und derart über das Lichtleitelement gestülpt, dass unter Zug stehend am Aussenumfang der Lichtleiterplatte anliegt und zumindest die zur Lichtabgabe vorgesehene Seite des Lichtleitelements sowie dessen Außenumfang im Wesentlichen vollständig überspannt. Das von dem Lichtleitelement verteilt abgegebene Licht wird somit letztendlich über die lichtdurchlässige Abdeckung der Leuchte abgegeben, wobei sich diese allerdings selbständig der Form des Lichtleitelements sowie der Position der Beleuchtungseinheit anpasst.

Erfindungsgemäß wird also eine Leuchte mit einem plattenförmigen Lichtleitelement sowie einer von dem Lichtleitelement gehaltenen Beleuchtungseinheit vorgeschlagen, wobei die Beleuchtungseinheit eine zur Abgabe des Lichts erster Leuchtmittel vorgesehene Lichtabstrahlöffhung aufweist, die gegenüber einer durch das Lichtleitelement festgelegten Ebene übersteht. Weiterhin weist die Beleuchtungseinheit zweite Leuchtmittel zur Lichteinkopplung von Licht in das Lichtleitelement auf und das Lichtleitelement ist zur Abgabe dieses Lichts über zumindest eine Flachseite ausgebildet, wobei ferner eine Abdeckung der Leuchte durch eine Bespannung gebildet ist, welche aus einem zumindest teilweise lichtdurchlässigen, flexiblen Material besteht, und wobei das Bespannungsmaterial taschenartig gestaltet, hinsichtlich seiner Größe so bemessen und derart über das Lichtleitelement gestülpt und an einer Rückseite des Lichtleitelements, die der zur Lichtabgabe vorgesehenen Seite gegenüber liegt, fixiert ist, dass das Bespannungsmaterial unter Zug stehend am Aussenumfang der Lichtleiterplatte anliegt und zumindest die zur Lichtabgabe vorgesehene Seite des Lichtleitelements sowie dessen Außenumfang im Wesentlichen vollständig überspannt. Dabei weist das taschenartig ausgebildete Bespannungsmaterial eine Öffnung auf, deren Randbereiche an der Rückseite des Lichtleitelements derart zusammengeführt sind, dass das Bespannungsmaterial das Lichtleitelement sowie die Beleuchtungseinheit im Wesentlichen vollständig umspannt.

Die Erfindung ist insbesondere dadurch gekennzeichnet, dass an der Rückseite des Lichtleitelements ein vorzugsweise längliches Profilelement angeordnet ist, an dem Randbereiche der Öffnung des Bespannungsmaterials befestigt sind.

Dadurch, dass die Abdeckung erfindungsgemäß durch ein flexibles Material gebildet ist, welches in entsprechender Weise an den Komponenten der Leuchte befestigt ist beziehungsweise an diesen anliegt, kann sich die Abdeckung in flexibler Weise an die Strukturen der Leuchte anpassen. Hierdurch wird der Effekt erzielt, dass sich die Lichtabstrahlöffnung der Beleuchtungseinheit harmonisch in das Äußere der Leuchte einfügt und insbesondere keine Vorsprünge oder Kanten auftreten, die das Erscheinungsbild der Leuchte negativ beeinträchtigen würden. Stattdessen setzt die für die gerichtete Lichtabgabe genutzt Lichtabstrahlöffhung die Form der Oberfläche des Gehäuses harmonisch fort.

Dieser Effekt wird ferner auch dadurch verstärkt, dass die Lichtabstrahlöffnung der Beleuchtungseinheit gegenüber der durch das Lichtleitelement festgelegten Ebene übersteht. Es ergibt sich hierdurch eine komplexe dreidimensionale Oberflächengestaltung des Äußeren der Leuchte, die in sehr einfacher und eleganter Weise realisiert werden kann. Insbesondere ist es nicht erforderlich, äußerst komplexe und damit nur aufwendig und kostenintensiv herzustellende Oberflächenteile für das Leuchtengehäuse zu nutzen. Stattdessen wird eine Leuchte geschaffen, die eine völlig neuartige, äußerst ansprechende Form aufweist.

Weiterhin wird durch das Überstülpen des Lichtleitelements mit dem Bespannungsmaterial der Effekt erzielt, dass auch im Randbereich des Lichtleitelements keine lichtundurchlässigen Komponenten vorhanden sind und dementsprechend die flächige Lichtabgabe bis in den Randbereich der Abdeckung ohne Abschattung erfolgen kann. Dieser für die Lichtabgabe vorteilhafte Effekt wird ferner dadurch verstärkt, dass gemäß einem besonders bevorzugten Ausführungsbeispiel das Lichtleitelement dazu ausgebildet ist, einen Teil des eingekoppelten Lichts auch über dessen Randbereich abzugeben.

Dabei ist besonders bevorzugt vorgesehen, dass das Bespannungsmaterial eine Öffnung aufweist, die der Lichtabstrahlöffnung der Beleuchtungseinheit entspricht. Das Bespannungsmaterial ist in diesem Fall am Randbereich der Lichtabstrahlöffhung fixiert, lässt diese allerdings ansonsten frei, sodass die gerichtete Lichtabgabe unbeeinflusst von der Abdeckung erfolgen kann.

Zur Anordnung der Beleuchtungseinheit an dem plattenförmigen Lichtleitelement ist vorzugsweise vorgesehen, dass dieses eine Öffnung oder Ausnehmung aufweist, in der die Beleuchtungseinheit angeordnet ist. Die zweiten Leuchtmittel sind in diesem Fall vorzugsweise am Umfang von Befestigungselementen der Beleuchtungseinheit verteilt und einer Randfläche der Öffnung beziehungsweise Ausnehmung des Lichtleitelements zugewandt angeordnet, sodass ein effizientes Einkoppeln des Lichts in das Lichtleitelement erfolgen kann. Vorzugsweise steht hierbei die Beleuchtungseinheit an beiden Seiten über das Lichtleitelement über.

Das erfindungsgemäß verwendete Material zum Realisieren der Abdeckung besteht vorzugsweise aus einem bidirektional-flexiblen Textilmaterial. Es handelt sich hierbei insbesondere um einen Stretchstoff, der im vorliegenden Fall maschinell in einem Strickverfahren hergestellt wird. Dieser wird dann zu der taschenartigen Konfiguration geschnitten und genäht, so dass die Abdeckung in Art eines Bezugs in einfacher Weise über das Lichtleitelement übergestülpt werden kann.

Indem die Taschenform des Bespannungsmaterials erfindungsgemäß eine Öffnung aufweist, deren Randbereiche an der Rückseite des Lichtleitelements derart zusammen geführt sind, dass das Bespannungsmaterial das Lichtleitelement sowie die Beleuchtungseinheit im Wesentlichen vollständig umspannt, wird im Wesentlichen die Außenhülle der Leuchte vollständig durch das Bespannungsmaterial gebildet. Ein Fixieren des Bespannungsmaterials kann dann beispielsweise dadurch erfolgen, dass gegenüberliegende Randbereiche der Öffnung des Bespannungsmaterials lösbar miteinander verbunden sind, beispielsweise mit Hilfe eines Klettverschlusses. Indem ebenfalls erfindungsgemäß an der Rückseite des Lichtleitelements ein vorzugsweise längliches Profilelement angeordnet ist, an dem die Randbereiche der Öffnung des Bespannungsmaterials befestigt sind und das Profilelement gemäß einem bevorzugten Ausführungsbeispiel zwei parallel zueinander verlaufende Nuten aufweist, in welchen zwei aneinander gegenüberliegende Randbereiche der Öffnung des Bespannungsmaterials befestigt sind, können diese in diesem Fall mit sogenannten Kedern versehen sein, welche dann in die Nuten des Profilelements eingedrückt werden.

Bei der erfindungsgemäßen Leuchte handelt es sich insbesondere um eine Pendelleuchte. Zur Aufhängung der Leuchte genutzte Seile werden dann durch in dem Bespannungsmaterial vorgesehene Öffnungen hindurchgeführt. In das Bespannungsmaterial können hierfür entsprechende Ösen integriert sein. Alternativ hierzu könnte die Leuchte allerdings auch als Steh-, Tisch-, Deckeneinbau- oder Deckenanbauleuchte realisiert werden.

Die Beleuchtungseinheit wird wie bereits erwähnt insbesondere zur gerichteten direkten Beleuchtung genutzt. Vorzugsweise ist deshalb vorgesehen, dass diese einen Strahler aufweist, dessen Lichtaustrittsöffnung dann die Lichtaustrittsöffnung der Beleuchtungseinheit bildet. Dabei kann besonders bevorzugt vorgesehen sein, dass der Strahler verstellbar, insbesondere kardanisch, gelagert ist. Hierbei besteht dann also die Möglichkeit, den Strahler entsprechend auszurichten und die gerichtete Lichtabgabe in eine gewünschte Vorzugsrichtung vorzunehmen. Dadurch, dass das Bespannungsmaterial, welches mit der Lichtaustrittsöffnung des Strahlers verbunden ist, flexibel ist, ist sichergestellt, dass sich die Leuchtenform dann automatisch entsprechend der Ausrichtung des Strahlers anpasst und trotzdem die erfindungsgemäße harmonische Einbindung der Lichtabstrahlöffnung in die Leuchtenabdeckung erzielt wird.

Selbstverständlich können erfindungsgemäß mehrere Beleuchtungseinheiten vorgesehen sein. Hinsichtlich der Realisierung der erfindungsgemäßen Leuchte bestehen also große Freiheiten.

Nachfolgend soll die Erfindung anhand der beiliegenden Zeichnung näher erläutert werden. Es zeigen:
- Figuren 1a und 1b: Ansichten einer erfindungsgemäß ausgestalteten Pendelleuchte;
- Figur 2: die Leuchte gemäß Figur 1a und 1b ohne die durch das flexible Bespannungsmaterial realisierte Abdeckung des Leuchtenkörpers;
- Figuren 3a und 3b: weitere Ansichten der Leuchte ohne die Bespannung;
- Figur 4: eine vergrößerte Darstellung, in der die Befestigung und Anordnung des Bespannungsmaterials erkennbar ist;
- Figur 5: eine Schnittdarstellung zur Verdeutlichung der Befestigung einer Beleuchtungseinheit in einer Öffnung des Lichtleitelements;
- Figuren 6a bis 6e: verschiedene Ansichten einer Beleuchtungseinheit;
- Figur 7: das taschenförmige Abdeckungsmaterial zum Bespannen der Leuchte; und
- Figuren 8 bis 10: aufeinanderfolgende Schritte des Überstülpens und Befestigens des Abdeckungsmaterials.

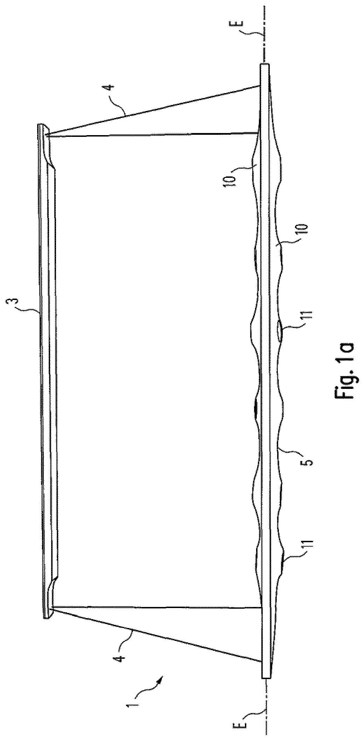

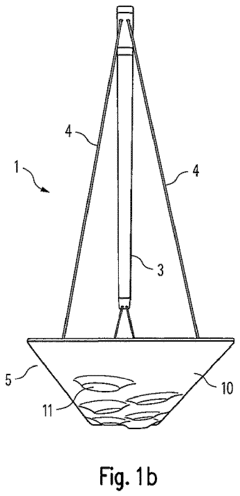

Die Figuren 1a und 1b zeigen eine allgemein mit dem Bezugszeichen 1 versehene Leuchte, bei der das erfindungsgemäße Konzept zur Anwendung kommt. Im dargestellten Ausführungsbeispiel ist die Leuchte 1 als Pendelleuchte ausgeführt, da hier - wie anhand der nachfolgenden Beschreibung gut erkennbar - die Vorteile der erfindungsgemäßen Lösung in besonders guter Weise zur Geltung kommen. Trotz allem wäre es auch denkbar, die vorliegende Erfindung in Form anderer Leuchtentypen zu realisieren, beispielsweise als Steh- oder Tischleuchte oder auch als Deckenanbau- oder Deckeneinbauleuchte.

Die Aufhängung des eigentlichen Leuchtenkörpers 5 erfolgt mit Hilfe eines schmalen länglichen Deckenanbaugehäuses 3, welches unmittelbar an einem Trägerelement, also beispielsweise an der Decke eines Raums oder dergleichen montiert wird. Auf ein derartiges Deckenanbaugehäuse 3 könnte ggf. allerdings auch verzichtet werden. Das Deckenanbaugehäuse 3 dient im Falle der dargestellten Pendelleuchte ferner auch der Aufnahme von Betriebsgeräten zur Stromversorgung, wobei die Aufhängung des Leuchtenkörpers 5 dann über Seile 4 erfolgt, die sich von den beiden stirnseitigen Endbereichen des Deckenanbaugehäuses 3 nach unten erstrecken. Wie nachfolgend noch näher beschrieben wird, dienen hierbei diese Seile 4 nicht nur der mechanischen Halterung des Leuchtenkörpers 5 sondern auch der Stromversorgung der in dem Leuchtenkörper 5 angeordneten Einheiten, die für die Lichtabgabe verantwortlich sind.

Die Besonderheit der erfindungsgemäßen Leuchte 1 besteht dabei in der Gestaltung bzw. der Formgebung des Leuchtenkörpers 5 sowie der Art und Weise der Lichtabgabe.

Die Form des Leuchtenkörpers 5 zeichnet sich hierbei zunächst dadurch aus, dass durch eine nachfolgend noch näher beschriebene Gerüststruktur eine im vorliegenden Fall rechteckige, längliche Grundstruktur gebildet ist, die eine - hier horizontale - zentrale Ebene E des Leuchtenkörpers 5 bildet. Zu beiden Seiten dieser Ebene E aber insbesondere auch über ihren Umfang hinweg ist die Gerüststruktur von einer Abdeckung 10 überspannt, welche darüber hinaus auch zu beiden Seiten über die Ebene E überstehende Formgebungselemente überspannt bzw. an diesen fixiert ist. Da das Material der Abdeckung 10 flexibel ist, folgt dieses also in gekrümmter Weise den durch die Gerüststruktur und durch die Formgebungselemente vorgegebenen Bahnen, so dass sich letztendlich die erkennbare dreidimensionale Gestaltung des Äußeren des Leuchtenkörpers 5 ergibt. Es wird im Weiteren noch ausführlich erläutert werden, in welcher Weise diese spezielle, optische äußerst ansprechende Gestaltung der Oberfläche erzielt werden kann. Neben diesem ansprechenden Erscheinungsbild ergibt sich ferner auch der weitere Vorteil, dass mit Hilfe der Bespannung eine schallabsorbierende Wirkung durch die Leuchte 1 erzielt wird.

Eine weitere Besonderheit des Leuchtenkörpers 5 besteht nämlich in der Art und Weise der Lichtabgabe. So sind zunächst Leuchtmittel vorgesehen, mit deren Hilfe Licht großflächig und vorzugsweise diffus über die lichtdurchlässig gestaltete Abdeckung 10 abgegeben werden kann. D.h., das flexible Bespannungsmaterial ist lichtdurchlässig ausgeführt, wobei dann in dem von der Bespannung umschlossenen Innenraum des Leuchtenkörpers 5 nachfolgend noch näher beschriebene Leuchtmittel angeordnet sind, mit deren Hilfe möglichst gleichmäßig über die gesamte Abdeckung 10 hinweg Licht diffus abgegeben wird. Die Bereiche der Lichtabgabe umfassen dabei insbesondere auch den seitlichen Umfang der Abdeckung 10, da das lichtdurchlässige Bespannungsmaterial auch diese Bereiche umfasst.

Zusätzlich zu dieser diffusen Lichtabgabe weist die Leuchte 1 ferner weitere Mittel auf, mit deren Hilfe Licht gerichtet und vorzugsweise gebündelt in einer bestimmten Richtung abgegeben werden kann. Es handelt sich hierbei um nachfolgend ebenfalls noch näher beschriebene Beleuchtungseinheiten, die wiederum jeweils an der bereits erwähnten Gerüststruktur befestigt sind und eine Lichtaustrittsöffnung zur gerichteten Lichtabgabe aufweisen. Im vorliegenden Fall sind diese Beleuchtungseinheiten derart angeordnet, dass eine gerichtete Lichtabgabe zur Unterseite hin vorgesehen ist, wobei selbstverständlich auch denkbar wäre, zumindest einige Beleuchtungseinheiten derart anzuordnen bzw. zu orientieren, dass Licht gerichtet zur Oberseite hin abgegeben wird, um beispielsweise gezielt einen bestimmten Bereich der Decke aufzuhellen.

Das die Abdeckung bildende Bespannungsmaterial ist nunmehr derart ausgeführt, dass es sich bis zu diesen Lichtaustrittsöffnungen der Beleuchtungseinheiten erstreckt, diese allerdings nicht abdeckt. D.h., Lichtaustrittsöffnungen der Beleuchtungseinheiten bilden vorzugsweise zugleich auch Lichtaustrittsöffnungen 11 der Leuchtenabdeckung 10 und das Bespannungsmaterial beeinflusst nicht die durch die Beleuchtungseinheiten realisierte Lichtabgabe, wobei jedoch ggf. auch denkbar wäre, dass das Bespannungsmaterial die Lichtaustrittsöffnungen der Beleuchtungseinheiten jeweils überdeckt und zumindest in diesen Bereichen dann derart ausgeführt ist, dass es die gerichtete Lichtabgabe nicht oder nur kaum beeinflusst.

Im dargestellten Ausführungsbeispiel stellen also die nachfolgend näher beschriebenen Beleuchtungseinheiten gleichzeitig auch die bereits oben erwähnten Formgebungselemente dar, mit deren Hilfe die dreidimensionale Gestaltung der Oberfläche des Leuchtenkörpers 5 erzielt wird. Alternativ oder ergänzend hierzu könnten an der Gerüststruktur allerdings auch weitere Formgebungselemente vorgesehen sein, die keine Lichtabgabe bewirken, allerdings gezielt dazu benutzt werden, aufgrund des bereits oben beschriebenen Effekts durch entsprechendes Hervorstehen gegenüber der Ebene E der Gerüststruktur die Form des Leuchtenkörpers 5 zu beeinflussen.

Nachfolgend sollen nunmehr zunächst die im Inneren des Leuchtenkörpers 5 befindlichen Komponenten der erfindungsgemäßen Leuchte 1 näher erläutert werden. Wie bereits oben erwähnt wird hierbei davon ausgegangen, dass die Gerüststruktur eine längliche, rechteckförmige Grundform bildet, an der dann die weiteren Einheiten, insbesondere die Beleuchtungseinheiten für die direkte Lichtabgabe und ggf. zusätzlich oder alternativ hierzu vorgesehene Formgebungselemente ohne Beleuchtungsfunktion befestigt sind. Es ist allerdings darauf hinzuweisen, dass das erfindungsgemäße Konzept deutlich vielseitiger realisierbar ist und selbstverständlich auch die Anzahl der zum Einsatz kommenden Beleuchtungseinheiten für die gerichtete Beleuchtung bzw. die Anzahl der Formgebungselemente frei gewählt werden kann. Die durch die Gerüststruktur vorgegebene Grundform des Leuchtenkörpers 5 muss hierbei auch nicht rechteckig oder quadratisch sein, sondern könnte eine beliebige Form aufweisen. Denkbar wäre insbesondere eine polygonale bzw. allgemein eine mehreckige Form oder aber auch eine ovale oder ellipsenartige Form, insbesondere eine Kreisform.

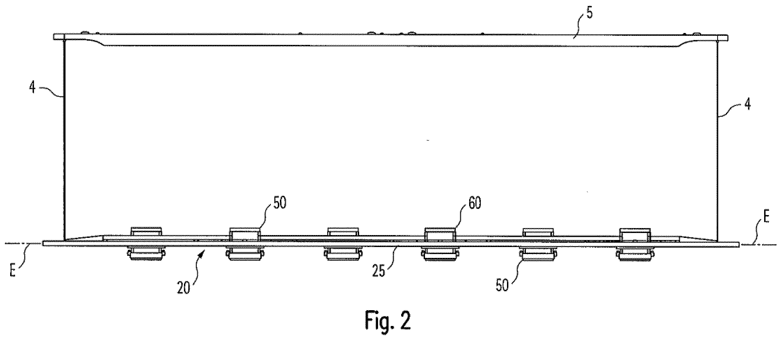

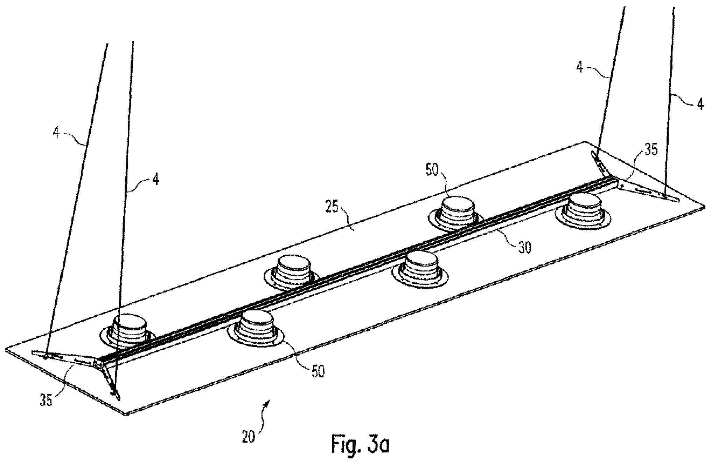

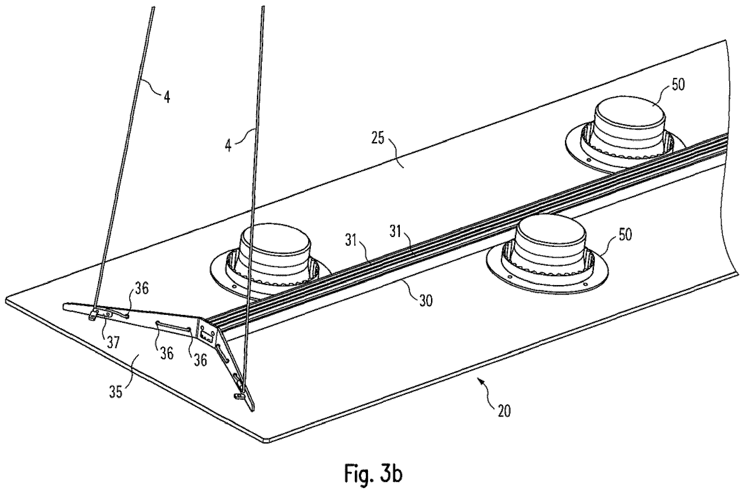

Die Figuren 2, 3a und 3b zeigen hierbei zunächst Ansichten der Leuchte 1 in einem Zustand, in dem die Abdeckung 10 bzw. Bespannung entfernt wurde. Insbesondere den perspektivischen Ansichten der Figuren 3a und 3b kann hierbei die Gerüststruktur 20 entnommen werden, die in erster Linie durch ein plattenförmiges Lichtleitelement bzw. einen Lichtleiter 25 sowie einem an dessen Oberseite befestigen Verstärkungsprofil 30 gebildet ist und durch welche die Umfangsform des Leuchtenkörpers 5 festgelegt wird. Erkennbar ist weiterhin, dass im dargestellten Fall insgesamt sechs Beleuchtungseinheiten 50 zum Einsatz kommen. Diese Beleuchtungseinheiten 50 dienen wie bereits erwähnt insbesondere der direkten bzw. gerichteten Lichtabgabe zur Unterseite hin, gleichzeitig weisen sie jedoch auch weitere Mittel zur Lichterzeugung auf, mit deren Hilfe Licht flächig über die Leuchtenabdeckungen 10 abgegeben wird. Selbstverständlich kann die Anzahl der Beleuchtungseinheiten 50 abhängig von der Form und Größe des Lichtleiters 25 und damit der Leuchte 1 insgesamt auch variieren.

Zentrales Element der Gerüststruktur 20 ist also der plattenförmige Lichtleiter 25. Da dieser möglichst leicht und dünn sein sollte und dementsprechend im vorliegenden Fall eine Stärke von lediglich einigen Millimetern aufweist, ist dessen Eigenstabilität eher gering. Zur zusätzlichen Stabilisierung der Gerüststruktur 20 ist deshalb ein sich in Längsrichtung an der Oberseite des Lichtleiters 25 mittig erstreckendes

Verstärkungsprofil 30 vorgesehen. Dieses ist an seinen Endbereichen - wie in den Figuren 3a und 3b erkennbar - mit abgewinkelt ausgeführten Verstärkungsarmen 35 verbunden, an denen auch die Seile 4 zur Aufhängung der Leuchte 1 angreifen. Da das Verstärkungsprofil 30 und die Verstärkungsarme 35 mit der Lichtleiterplatte 25 verschraubt sind, ergibt sich hierdurch eine insgesamt ausreichend steife bzw. stabile Konstruktion, bei der ein ungewolltes Durchbiegen der Gerüststruktur 20 trotz nicht unerheblicher Länge des Leuchtenkörpers 5 verhindert wird. Das Verstärkungsprofil 30 bringt weiterhin den Vorteil mit sich, dass es für die Unterbringung von Bauteilen zur Stromversorgung der Beleuchtungseinheiten 50 genutzt werden kann. Ferner wird an dem Verstärkungsprofil 30 in der später noch detaillierter beschriebenen Weise das Bespannungsmaterial befestigt.

Im Folgenden soll nunmehr die Ausgestaltung und Halterung der Beleuchtungseinheiten 50 näher erläutert werden. Diese sind einerseits für die direkte bzw. gerichtete Beleuchtung zur Unterseite hin verantwortlich, andererseits weisen sie allerdings auch Mittel zur Lichterzeugung auf, über welche die bereits oben angesprochene flächige Lichtabgabe über die Leuchtenabdeckung 10 hin erfolgt. Genau genommen sind diese weiteren Mittel zur Lichterzeugung derart ausgeführt, dass sie Licht in den Lichtleiter 25 einkoppeln. Innerhalb dieses Lichtleiters 25 wird dann das Licht in bekannter Weise durch Mehrfachreflexionen möglichst gleichmäßig verteilt, dann flächig über die Ober- und Unterseite des Lichtleiters 25 sowie über dessen Umfang ausgekoppelt und schließlich über die Abdeckung 10 allseitig abgestrahlt. Das flächige Auskoppeln des Lichts aus der Lichtleiterplatte 25 erfolgt hierbei in bekannter Weise dadurch, dass dessen Oberfläche(n) mit speziellen Auskoppelstrukturen versehen ist bzw. sind, die auftreffendes Licht derart umlenken, dass dieses nicht mehr intern total reflektiert wird, sondern stattdessen über eine der Flachseiten die Lichtleiterplatte 25 verlassen kann. Ein Teil des Lichts, welches im Rahmen dieser Weiterleitung bis an den Randbereich des Lichtleiters 25 gelangt, kann ferner auch über die Umfangsfläche den Lichtleiter 25 verlassen.

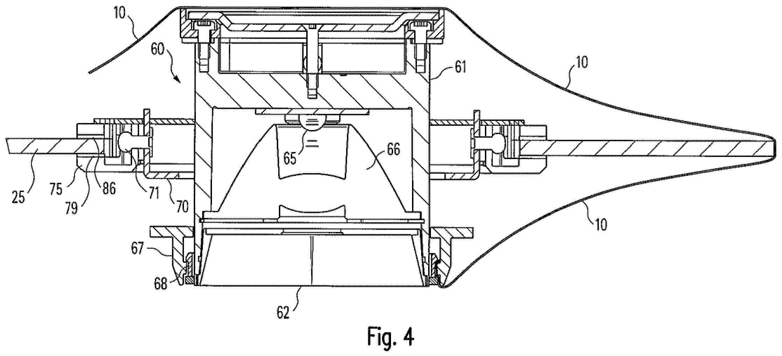

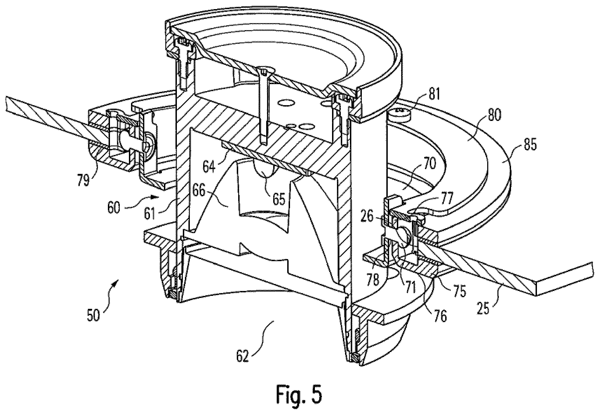

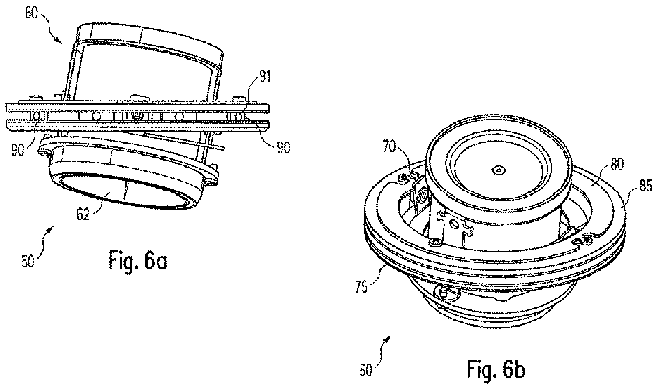

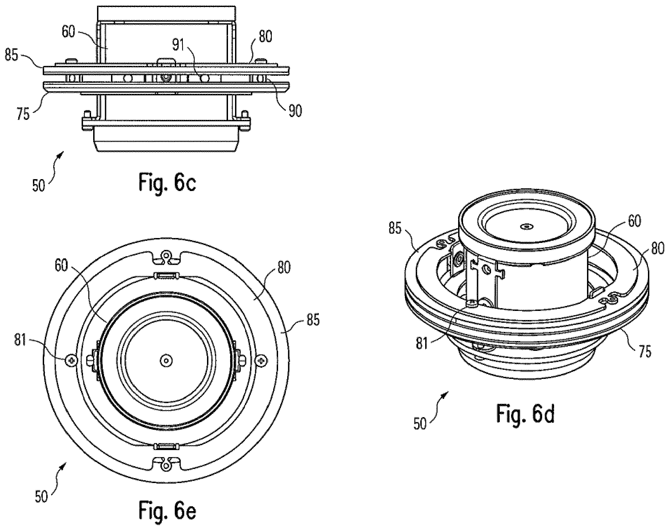

Ansichten einer einzelnen Beleuchtungseinheit im nicht an dem Lichtleiter 25 montierten Zustand sind in den Figuren 6a bis 6e dargestellt. Die eigentliche Lichtabgabe für die Direktbeleuchtung erfolgt durch einen zylinderförmigen Strahler 60, der an der Vorder- bzw. Unterseite seines zylinderförmigen Gehäuses 61 eine kreisförmige Lichtaustrittsöffnung 62 aufweist, über welche die Lichtabgabe erfolgt. Im dargestellten Ausführungsbeispiel dient entsprechend der Schnittdarstellung von Figur 4 oder 5 eine innerhalb des Strahlergehäuses 61 angeordnete LED-Platine 64 mit einer zugehörigen LED 65 oder einem LED-Cluster als Lichtquelle, wobei dieser LED 65 eine Linse 66 vorgeordnet ist, mit deren Hilfe das LED-Licht kollimiert, also in ein in etwa paralleles Strahlenbündel geformt wird, welches dann über die Lichtaustrittsöffnung 62 abgegeben wird. Bei der Linse handelt es sich um eine bereits hinlänglich bekannte sog. TIR-Linse, wobei offensichtlich alternativ zu der dargestellten Ausführungsform des Strahlers 60 auch andere optische Systeme eingesetzt werden könnten, mit deren Hilfe eine direkte, gerichtete Lichtabgabe erzielt werden kann.

Jede Beleuchtungseinheit 50 weist also einen Strahler 60 auf, der - wie beispielsweise den Schnittdarstellungen der Figuren 4 und 5 entnommen werden kann - derart positioniert ist, dass er etwa mittig in der Ebene der Lichtleiterplatte 25 und damit der Ebene E der Gerüststruktur 20 angeordnet ist. D.h., der Strahler 60 überragt die horizontale Ebene E der Gerüststruktur 20 sowohl zur Unterseite als auch zur Oberseite hin. Die Lichtleiterplatte 25 weist hierbei jeweils eine kreisförmige Aufnahme - bzw. Montageöffnung - auf, in der dann eine Beleuchtungseinheit 50 montiert wird.

Das zylinderförmige Gehäuse 61 des Strahlers 60 ist im dargestellten bevorzugten Ausführungsbeispiel kardanisch aufgehängt, so dass ein freies Verschwenken des Strahlers 60 und damit ein Ausrichten der gerichteten Lichtabgabe ermöglicht wird. Allerdings wäre auch für zumindest einen Teil der Strahler 60 eine starre Halterung bzw. eine Halterung, die lediglich ein Schwenken um eine einzige Achse ermöglicht, denkbar.

Die Befestigung des Strahlers 60 gemeinsam mit den Mitteln zur kardanischen Aufhängung 70 erfolgt hierbei über mehrere ringartige Montageelemente, die insbesondere in der Schnittdarstellung von Figur 5 erkennbar sind.

Dabei ist zunächst ein erstes, ringförmiges abgewinkeltes Befestigungsteil 75 vorgesehen, welches derart ausgeführt ist, dass es mit einem unteren, horizontalen Schenkel 76 an der Unterseite der Lichtleiterplatte 25 anliegt. Von diesem horizontalen Schenkel 76 erstreckt sich an dessen Innenumfang einer zweiter vertikaler Schenkel 77, der zunächst zwei einander gegenüberliegende Öffnungen 78 aufweist, in welche Aufhängungselemente 71 der kardanischen Halterung 70 eingreifen. Andererseits sind nach außen gerichtet an der Umfangswand des vertikalen Stegs 77 über den Umfang gleichmäßig verteilte LED-Platinen 90 vorgesehen, die nach außen gerichtet sind (siehe Figuren 6a und 6c).

Zur weiteren Montage der Beleuchtungseinheit 50 ist ein oberer Montagering 80 vorgesehen, der mittels mehrerer Schrauben 81 mit dem abgewinkelten Befestigungsteil 75 verbunden werden kann. Ferner ist unterhalb des oberen Montagerings 80 ein weiterer Distanzring 85 vorgesehen, der zwischen der Unterseite des Rings 80 und der Oberseite des Lichtleiters 25 positioniert wird.

Die Montage der Beleuchtungseinheit erfolgt dann dadurch, dass zunächst das abgewinkelte Befestigungsteil 75 mit der daran befestigten kardanischen Aufhängung 70 sowie dem Strahler 60 von der Unterseite her an die Montageöffnung des Lichtleiters 25 angesetzt wird. In diesem Zustand wird dann von der Oberseite her der Distanzring 85 aufgelegt und letztendlich der zweite Montagering 80 mit Hilfe der Schrauben 81 mit dem unteren abgewinkelten Befestigungsteil 75 verbunden. Hierdurch erfolgt eine klemmende Haltung der gesamten Einheit an dem Lichtleiter 25 und die Beleuchtungseinheit 50 ist dementsprechend in der gewünschten Position an dem Lichtleiter 25 fixiert. Dabei müssen die Montageöffnung des Lichtleiters 25 und die entsprechenden Befestigungsteile für die Beleuchtungseinheit 50 nicht zwingend kreisförmig ausgebildet sein sondern können auch eine andere Form, beispielsweise eine quadratische Form annehmen. Ferner kann die Befestigung der Beleuchtungseinheit 50 an dem Lichtleiter 25 selbstverständlich auch in anderer Weise erfolgen.

In der montierten Position der Beleuchtungseinheit sind hierbei die LED-Platinen 90 derart positioniert und ausgerichtet, dass sie dem Randbereich der Montageöffnung des Lichtleiters 25, also der inneren Umfangsfläche 26, gegenüber liegen. Bei Aktivieren dieser LEDs 91 wird also das Licht über den Randbereich der Montageöffnung des Lichtleiters 25 in diesen eingekoppelt. Dabei ist weiterhin vorteilhaft vorgesehen, dass - wie wiederum in Figur 4 erkennbar - diejenigen Bereiche des abgewinkelten Befestigungsteils 75 sowie des Distanzrings 85, zwischen denen der Lichtleiter 25 eingeklemmt wird, mit einem ringartigen reflektierenden Element 79 bzw. 86 versehen sind. Vorzugsweise handelt es sich hierbei um ein hoch reflektierendes Material, durch welches einerseits die Lichteinkopplung optimiert wird, andererseits eine Durchmischung des Lichts und damit eine Vergleichmäßigung der Einkopplung über den gesamten Umfang hinweg in den Lichtleiter 25 verbessert wird. Diese Maßnahme trägt also zusätzlich dazu bei, dass der flächige Lichtleiter 25 gleichmäßig erhellt wird und letztendlich dann auch die Leuchtenabdeckung 10 in einer gleichmäßigen Helligkeit erscheint.

Eine gleichmäßige Lichtabgabe über die Leuchtenabdeckung 10 wird darüber hinaus auch dadurch optimiert, dass - wie insbesondere anhand der Figuren 3a und 3b erkennbar - die Beleuchtungseinheiten 60 möglichst gleichmäßig verteilt in der Ebene der Lichtleiterplatte 25 positioniert sind. Gleichzeitig gestattet diese Positionierung der Beleuchtungseinheiten 50 allerdings auch, diese in einfacher Weise mit Strom zu versorgen, wie nachfolgend noch näher erläutert wird.

Zur Abhängung des Leuchtenkörpers 5 und Stromversorgung der Leuchtmittel ist vorgesehen, dass die von dem Deckenanbaugehäuse 3 nach unten geführten Seile 4 an den Endbereichen der oben erwähnten Verstärkungsarme 35 angreifen. Diese Arme 35 sind - wie in Figur 3b erkennbar - in regelmäßigen Abständen mit Löchern 36 versehen, wobei die Seile 4 schlingenartig durch diese Löcher 36 bis zum zentralen Verstärkungsprofil 30 geführt sind. Durch die ggf. zusätzliche Nutzung von Zugentlastungselementen 37 wird insgesamt eine sichere und stabile Aufhängung der Leuchte 1 ermöglicht.

Die Seile 4 erstrecken sich also entlang der Verstärkungsarme 35 zu dem zentralen Verstärkungsprofil 30 und sind hier elektrisch mit weiteren zur Stromversorgung genutzten Leitungen und Einheiten gekoppelt, die entlang des Verstärkungsprofils 30 zu den Beleuchtungseinheiten 50 führen. Dabei ist vorgesehen, dass das Verstärkungsprofil 30 in seinem unteren Bereich einen länglichen Aufnahmeraum für weitere Stromversorgungseinheiten zur Stromversorgung der Leuchtmittel beinhaltet. Es kann sich hierbei um kleine Platinen oder elektronische Komponenten handeln, welche die über die Aufhängungsseile 4 zugeführte Versorgungsspannung abschließend in eine geeignete Spannung für den Betrieb der LEDs 65 der Strahler 60 sowie der für die Lichteinkopplung in den Lichtleiter 25 verantwortlichen LEDs 91 vornehmen. Beispielsweise kann also vorgesehen sein, dass ein in dem Deckenanbaugehäuse 3 angeordnetes Betriebsgerät zunächst die allgemeine Netzversorgungsspannung in eine Niedervoltversorgungsspannung umsetzt, die über die Aufhängungsseile 4 dem Leuchtenkörper 5 zugeführt wird. Mit Hilfe der weiteren elektronischen Komponenten, die in der zentralen Verstärkung 22 positioniert sind, erfolgt dann die eigentliche Stromversorgung der Beleuchtungseinheiten 50.

Dabei kann vorzugsweise vorgesehen sein, dass die gerichtete Lichtabgabe unabhängig von der über die Abdeckung 10 realisierten flächigen und ggf. diffusen Lichtabgabe eingestellt werden kann. Hierfür ist dann ggf. eine entsprechende zusätzliche Übermittlung von Steuerinformationen erforderlich, die dann möglicherweise die Nutzung zusätzlicher Leitungen für die Signalübermittlung oder für eine getrennte Stromversorgung der entsprechenden Leuchtmittel erfordert. Selbstverständlich könnte in Erweiterung dessen ferner auch vorgesehen sein, dass die Leuchtmittel in ihrer Intensität und/oder Farbe bzw. Farbtemperatur einstellbar sind.

Selbstverständlich kann allerdings auch eine andere Positionierung für die Mittel zur Stromversorgung realisiert werden. So wäre es im Fall der Pendelleuchte auch denkbar, auf das Deckenanbaugehäuse 5 zu verzichten und geeignete Betriebsgeräte, welche die Netzversorgungsspannung in eine für den LED-Betrieb geeignete Spannung umsetzen, unmittelbar in dem Aufnahmeraum der zentralen Verstärkung 22 anzuordnen.

Nach Montage der Beleuchtungseinheiten 50 an der Lichtleiterplatte 25 erfolgt dann die Bespannung der sich hierbei ergebenden Anordnung mit dem flexiblen Material, welches die Abdeckung 10 des Leuchtenkörpers 5 bildet. Hierfür wird bevorzugt ein sog. bidirektional flexibles Textilmaterial in Form eines gestrickten Stretchstoffes verwendet, welches also in zwei aufeinander senkrecht stehenden Richtungen der Materialebene dehnbar ist. Das Material ist wie bereits erwähnt insbesondere lichtdurchlässig ausgebildet, um eine diffuse Aufhellung des Leuchtenkörpers 5 zu ermöglichen. Diesbezüglich bestehen allerdings keine generellen Einschränkungen und es wäre auch denkbar, ein Material zu verwenden, welches in spezieller Weise gestaltet ist, um der Oberfläche des Leuchtenkörpers 5 ein besondere Aussehen zu verleihen. Auch ein gemustertes Material oder ein zumindest teilweise farbiges Material könnte hierfür verwendet werden.

Wesentlich ist allerdings, dass das Material vollständig um die Gerüststruktur 20, also insbesondere um den Lichtleiter 25 herum geführt ist, andererseits sich zu den Beleuchtungseinheiten 50 hin erstreckt und durch diese abgestützt ist bzw. dort ebenfalls fixiert ist, wodurch die Außenabdeckung 10 des Leuchtenkörpers 5 letztendlich die in Figur 1 erkennbare dreidimensionale, wellenartige Form annimmt.

Die Abdeckung 10 weist hierbei den Lichtaustrittsöffnungen 62 der Strahler 60 entsprechende Ausnehmungen bzw. Öffnungen auf. Ein Befestigen der Abdeckung 10 am Strahler 60 im Bereich der Lichtaustrittsöffnung 62 erfolgt hierbei mit Hilfe zweier Klemmringe 67 und 68 (siehe hierzu Figur 4), die derart ineinander eingreifen, dass sie miteinander verklemmt bzw. verrastet werden können, gleichzeitig aber auch am Strahlergehäuse 61 befestigbar sind. Dabei wird zunächst der Randbereich des Bespannungsmaterials in den Innenbereich des äußeren Rings 67 eingelegt. Anschließend wird von der Gegenseite her der zweite Klemmring 68 eingesetzt, so dass er mit dem äußeren Ring 67 verrastet und zwischen sich das Textilmaterial einklemmt. Die Anordnung bestehend aus den beiden Ringen 67 und 68 mit dem darin verklemmten Bespannungsmaterial wird dann auf den vorderen Endbereich des zylinderförmigen Strahlergehäuses 61 aufgesetzt. Hierdurch wird ein bündiger Abschluss des Bespannungsmaterials mit der Lichtaustrittsöffnung 62 des Strahlers 60 erzielt.

An der Strahlerrückseite hingegen wird das Bespannungsmaterial vorzugsweise nicht fixiert sondern lediglich durch das rückseitige Ende des Strahlers abgestützt. Hier weist das Material also im Gegensatz zur Vorderseite keine Öffnungen auf sondern überspannt stattdessen die Strahler 60. Eine Befestigung erfolgt stattdessen an dem Verstärkungsprofil 30, wie im Folgenden erläutert wird.

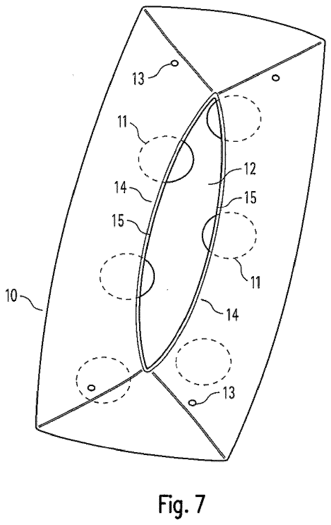

Das Verspannen des Bespannungsmaterials 10 mit der Lichtleiterplatte 25 wird dabei dadurch ermöglicht, dass das Material, wie in Figur 7 gezeigt, zunächst in entsprechender Form geschnitten und vernäht wird, derart, dass sich die dargestellte taschenartige Konfiguration ergibt. Eine der späteren Unterseite der Leuchtenabdeckung 10 entsprechende Fläche des Abdeckungsmaterial weist dann also die den Lichtabstrahlöffnungen 62 der Strahler 60 entsprechende Öffnungen 11 auf. An der gegenüberliegenden Rückseite hingegen ist eine längliche Öffnung 12 ausgebildet, die das Überstülpen des Bespannungsmaterials 10 über die Lichtleiterplatte 25 ermöglicht. In diese Rückseite sind weiterhin vier Ösen 13 eingearbeitet, die Öffnungen zum Hindurchführen der Aufhängungsseile 4 bilden. Die einander gegenüber liegenden Randbereiche 14 der Öffnung 12 sind mit länglichen Kedern 15 versehen, über welche dann das spätere Fixieren des Abdeckungsmaterials 10 an dem Profilelement 30 erfolgt.

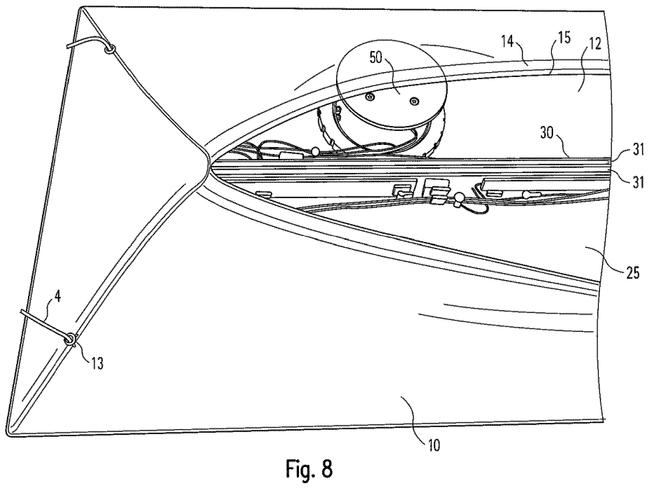

Die dargestellte taschenartige Konfiguration in Kombination mit der bidirektionalen Flexibilität des Bespannungsmaterials ermöglicht, dass dieses über die Baueinheit gebildet durch die Lichtleiterplatte 25 mit den Beleuchtungseinheiten 50 in Form eines Bezugs gestülpt und dann an dem Profilelement 30 fixiert werden kann. Dieser Vorgang ist in den Figuren 8 bis 10 dargestellt, wobei Figur 8 den Zustand zeigt, in dem das Bespannungsmaterial 10 bereits über die Lichtleiterplatte 25 gestülpt jedoch noch nicht an dem Verstärkungsprofil 30 befestigt wurde. Die Seile 4 für die Aufhängung der Leuchte 1 wurden allerdings bereits durch die Ösen 13 hindurch geführt. Das Bespannungsmaterial 10 ist hierbei derart gestaltet und hinsichtlich seiner Größe bemessen, dass es unter Zug stehend am Außenumfang der Lichtleiterplatte 25 anliegt. Durch das oben erläuterte Fixieren des Materials an den Lichtaustrittsöffnungen 62 der Beleuchtungseinheiten 50 wird dann an der Unterseite der Leuchte 1 bereits die dreidimensionale Gestaltung der Oberfläche geschaffen.

Da allerdings durch das Lichtleitelement 25 vorzugsweise auch Licht zur Oberseite hin abgegeben werden soll und dementsprechend die gesamte Außenhülle der Leuchte 1 möglichst gleichmäßig aufgehellt werden sollte, ist vorgesehen, dass auch an der Oberbeziehungsweise Rückseite das Abdeckungsmaterial 10 geschlossen wird, sodass dieses die Leuchte vollständig umhüllt. Grundsätzlich wäre hierfür denkbar, an dem Material selbst Maßnahmen vorzusehen, welche ein Verbinden der beiden Randbereiche der Öffnung 12 ermöglicht. Denkbar wäre beispielsweise ein Klettverschluss oder dergleichen.

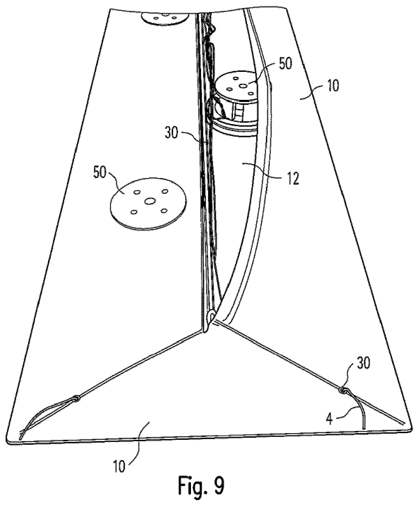

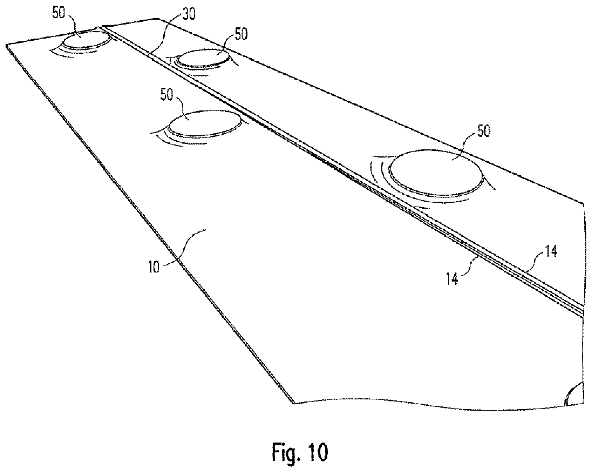

In bevorzugter Weise ist allerdings bei dem dargestellten Ausführungsbeispiel vorgesehen, dass die Randbereiche 14 der Öffnung 12 an dem Verstärkungsprofil 30 fixiert werden. Dieses weist an seiner Oberseite hierfür zwei parallel zueinander in Längsrichtung verlaufende Nuten 31 beziehungsweise Kanäle auf. Die Randbereiche 14 der Öffnung 12 der Abdeckung 10 sind wie bereits erwähnt mit Kedern 15 versehen, die dann in diese Nuten 31 eingedrückt werden, sodass das Bespannungsmaterial 10 hier fixiert wird. Figur 9 zeigt dabei den Zustand, in dem bereits eine Längsseite vollständig an dem Verstärkungsprofil 30 befestigt wurde, Figur 10 zeigt den endgültig geschlossenen Zustand, bei dem beide Längsseiten an dem Befestigungsprofil 30 fixiert wurden. Erkennbar ist also, dass das Material 10 in diesem Zustand die Lichtleiterplatte 25 mit den Beleuchtungseinheiten 50 im Wesentlichen vollständig umschließt und lediglich ein sehr schmaler, dem Abstand der beiden Nuten 31 entsprechender Spalt verbleibt, der allerdings ohnehin nicht für die Lichtabgabe zur Verfügung steht und dementsprechend keinen Einfluss auf das Erscheinungsbild der Leuchte hat.

Figur 10, bei der aus Gründen der Übersichtlichkeit auf die Darstellung der Aufhängungsseile verzichtet wurde, zeigt darüber hinaus auch, dass im Gegensatz zur Unter- beziehungsweise Vorderseite der Leuchte 1 die Beleuchtungseinheiten 50 an der Rückseite von dem Bespannungsmaterial 10 überdeckt werden. Sollten allerdings Strahler einzelner Beleuchtungseinheit nach oben gerichtet sein, könnten gegebenenfalls auch hier entsprechende Öffnungen in dem Abdeckungsmaterial 10 vorgesehen sein, wobei dies dann wiederum in der oben beschriebenen Weise an den Lichtaustrittsöffnungen der Strahler fixiert wird.

Durch die zuvor beschriebenen Maßnahmen umgibt also das Bespannungsmaterial 10 vollständig den Außenumfang des Lichtleiters, andererseits ist es an den Beleuchtungseinheiten 50 fixiert bzw. wird durch diese abgestützt, derart, dass sich aufgrund der Flexibilität des Materials eine gekrümmte Oberflächengestaltung der Abdeckung 10 ergibt, die der Positionierung der Beleuchtungseinheiten 50 folgt. Hierdurch ergibt sich eine besonders ansprechende Gestaltung des Leuchtengehäuses, die der Leuchte 1 ein besonders interessantes Aussehen verleiht, welches dadurch weiter hervorgehoben wird, dass mit Hilfe der LEDs 91 die Oberfläche des Leuchtengehäuses ebenfalls Licht abgeben kann bzw. leuchtend erscheint. Die Art und Weise der Bespannung des Leuchtenkörpers mit dem Bespannungsmaterial bringt dabei auch den Vorteil mit sich, dass das den Lichtleiter 25 über dessen Umfangsfläche verlassende Licht ebenfalls über die Abdeckung 10 abgegeben wird, so dass eine rahmenlose, vollflächige Lichtabgabe erzielt wird. Weiterhin führt die Bespannung des Leuchtenkörpers mit dem flexiblen Material dazu, dass eine größere Fläche geschaffen wird, die eine gewisse Flexibilität aufweist. Hierdurch kann auftreffender Schall absorbiert oder gedämpft werden, so dass die Leuchte 1 insgesamt eine schallabsorbierende Wirkung hat.

Dabei kann der zuvor beschriebene Effekt der Gestaltung der Oberflächenform zusätzlich dadurch verstärkt werden, dass die Strahler 60 aufgrund der erwähnten kardanischen Aufhängung verstellbar sind, insbesondere also in gewünschter Weise ausgerichtet werden können, um Licht in einem sehr speziell gewählten Winkelbereich auszugeben. Aufgrund der Flexibilität des Bespannungsmaterials kann dieses einer Verstellung der Strahler 60 folgen, so dass trotz unterschiedlicher Ausrichtung der Strahler 60 grundsätzlich eine - abgesehen von den Lichtabstrahlöffhungen 11 - geschlossene Leuchtenabdeckung erzielt wird. Die kardanische Aufhängung für die Strahler 60 ist dabei derart gewählt, dass diese trotz der Spannung der Abdeckung 10 die eingestellte Ausrichtung beibehalten. Hierfür ist also eine gewisse Reibung der kardanischen Aufhängungselemente erforderlich oder es sind entsprechende Rastmittel vorgesehen, welche die Strahler 60 in der eingestellten Ausrichtung entsprechend arretieren.

Das zuvor beschriebene Konzept der speziellen Gestaltung der Oberfläche bzw. Form des Leuchtenkörpers 5 ist dabei nicht zwingend darauf beschränkt, hierfür verstellbare Beleuchtungseinheiten 50 zu nutzen. Stattdessen könnten auch anderweitige, nicht lichtabgebende Formgebungselemente verwendet werden, die durch eine entsprechende Positionierung sowie ein Verbinden mit dem Bespannungsmaterial dafür sorgen, dass die Leuchtenabdeckung eine spezielle Gestaltung erhält. Für den Fall, dass diese Formgebungselemente verstellbar ausgestaltet sind, kann dann wiederum durch den Endverbraucher flexibel die Gestalt der Leuchte beeinflusst werden.

Letztendlich wird also mit Hilfe der erfindungsgemäßen Lösung eine Möglichkeit geschaffen, Licht in ansprechender Weise abzugeben und hierbei unterschiedlichste Beleuchtungsaufgaben zu erfüllen. Gleichzeitig kann durch die erfindungsgemäßen Maßnahmen das äußere Erscheinungsbild einer Leuchte in besonders positiver Weise gestaltet werden.

## Patentansprüche

1. Leuchte (1) mit einem plattenförmigen Lichtleitelement (25) sowie einer von dem Lichtleitelement (25) gehaltenen Beleuchtungseinheit (50), welche eine zur Abgabe des Lichts erster Leuchtmittel (65) vorgesehene Lichtabstrahlöffnung (62) aufweist, die gegenüber einer durch das Lichtleitelement (25) festgelegten Ebene (E) übersteht, wobei die Beleuchtungseinheit (50) weiterhin zweite Leuchtmittel zur Einkopplung von Licht in das Lichtleitelement (25) aufweist und das Lichtleitelement (25) zur Abgabe dieses Lichts über zumindest eine Flachseite ausgebildet ist,
**dadurch gekennzeichnet dass** eine Abdeckung (10) der Leuchte (1) durch eine Bespannung gebildet ist, welche aus einem zumindest teilweise lichtdurchlässigen, flexiblen Material besteht, wobei das Bespannungsmaterial taschenartig gestaltet, hinsichtlich seiner Größe so bemessen und derart über das Lichtleitelement (25) gestülpt und an einer Rückseite des Lichtleitelements (25), die der zur Lichtabgabe vorgesehenen Seite gegenüberliegt, fixiert ist, dass das Bespannungsmaterial unter Zug stehend am Aussenumfang der Lichtleiterplatte (25) anliegt und zumindest die zur Lichtabgabe vorgesehene Seite des Lichtleitelements (25) sowie dessen Aussenumfang im Wesentlichen vollständig überspannt, und
wobei das taschenartig ausgebildete Bespannungsmaterial eine Öffnung (12) aufweist, deren Randbereiche (14) an der Rückseite des Lichtleitelements (25) derart zusammengeführt sind, dass das Bespannungsmaterial das Lichtleitelement (25) sowie die Beleuchtungseinheit (50) im Wesentlichen vollständig umspannt, und
dass an der Rückseite des Lichtleitelements (25) ein vorzugsweise längliches Profilelement (30) angeordnet ist, an dem Randbereiche (14) der Öffnung (12) des Bespannungsmaterials (10) befestigt sind.

2. Leuchte nach Anspruch 1,
**dadurch gekennzeichnet,**
**dass** das Lichtleitelement (25) ferner dazu ausgebildet ist, einen Teil des eingekoppelten Lichts über den Randbereich abzugeben.

3. Leuchte nach Anspruch 1 oder 2,
**dadurch gekennzeichnet,**
**dass** das Bespannungsmaterial eine der Lichtabstrahlöffhung (62) der Beleuchtungseinheit (50) entsprechende Öffnung (11) aufweist und im Randbereich der Lichtabstrahlöffhung (62) an der Beleuchtungseinheit (50) fixiert ist.

4. Leuchte nach einem der vorherigen Ansprüche,
**dadurch gekennzeichnet,**
**dass** das Lichtleitelement (25) eine Öffnung oder Ausnehmung aufweist, in der die Beleuchtungseinheit (50) angeordnet ist,
wobei die zweiten Leuchtmittel (90, 91) am Umfang von Befestigungselementen der Beleuchtungseinheit (50) verteilt und einer Randfläche (26) der Öffnung bzw. Ausnehmung des Lichtleitelements (25) zugewandt angeordnet sind.

5. Leuchte nach Anspruch 4,
**dadurch gekennzeichnet,**
**dass** die Beleuchtungseinheit (50) an beiden Seiten über das Lichtleitelement (25) übersteht.

6. Leuchte nach einem der vorherigen Ansprüche,
**dadurch gekennzeichnet,**
**dass** die Abdeckung aus einem bidirektional flexiblen Textilmaterial gebildet ist.

7. Leuchte nach einem der vorherigen Ansprüche,
**dadurch gekennzeichnet,**
**dass** das Profilelement (30) zwei vorzugsweise parallel zueinander verlaufende Nuten (31) aufweist, in welchen zwei einander gegenüberliegende Randbereiche (14) der Öffnung (12) des Bespannungsmaterials (10) befestigt sind, insbesondere mit Hilfe von Kedern (15) eingehängt sind.

8. Leuchte nach einem der vorherigen Ansprüche,
**dadurch gekennzeichnet,**
**dass** es sich um eine Pendelleuchte handelt, wobei zur Aufhängung der Leuchte (1) genutzte Seile (4) durch Öffnungen in dem Bespannungsmaterial (10) hindurchgeführt sind.

9. Leuchte nach einem der vorherigen Ansprüche,
**dadurch gekennzeichnet,**
**dass** die Beleuchtungseinheit (50) einen Strahler (60) aufweist, dessen Lichtaustrittsöffnung (62) die Lichtaustrittsöffnung der Beleuchtungseinheit (50) bildet.

10. Leuchte nach Anspruch 9,
**dadurch gekennzeichnet,**
**dass** der Strahler (60) verstellbar, insbesondere kardanisch gelagert ist.

11. Leuchte nach einem der vorherigen Ansprüche,
**dadurch gekennzeichnet,**
**dass** diese mehrere Beleuchtungseinheiten (50) aufweist.

## Claims

1. A luminaire (1) with a plate-shaped light guiding element (25) and a lighting unit (50) held by the light guiding element (25), which has a light emission opening (62) provided for the emission of the light of the first lighting means (65), which projects with respect to a plane (E) defined by the light guiding element (25), wherein the lighting unit (50) furthermore has a second lighting means for coupling light into the light guiding element (25) and the light guiding element (25) is designed for the emission of said light via at least one flat side,
**characterized in that**
a cover (10) of the luminaire (1) is formed by a covering, which consist of an at least partially light-permeable, flexible material,
wherein the covering material is designed pocket-like, is dimensioned in terms of its size and is placed over the light guiding element (25) and is fixed to a rear side of the light guiding element (25), which is opposite the side provided for the light emission, in such a manner that the covering material subjected to tension abuts against the outer circumference of the light guiding plate (25) and substantially completely spans at least the side of the light guiding element (25) provided for the light emission and its outer circumference, and
wherein the covering material, which is designed pocket-like, has an opening (12), the edge regions (14) of which are brought together on the rear side of the light guiding element (25) in such a manner that the covering material substantially completely spans the light guiding element (25) and the lighting unit (50), and
that a preferably elongated profile element (30) is arranged on the rear side of the light guiding element (25), to which edge regions (14) of the opening (12) of the covering material (10) are fastened.

2. The luminaire according to Claim 1,
**characterized in**
**that** the light guiding element (25) is furthermore designed to emit a part of the coupled light via the edge region.

3. The luminaire according to Claim 1 or 2,
**characterized in**
**that** the covering material has an opening (11) corresponding to the light emission opening (62) of the lighting unit (50) and is fixed to the lighting unit (50) in the edge region of the light emission opening (62).

4. The luminaire according to any one of the preceding claims,
**characterized in**
**that** the light guiding element (25) has an opening or recess, in which the lighting unit (50) is arranged,
wherein the second lighting means (90, 91) are distributed on the circumference of fastening elements of the lighting unit (50) and are arranged facing an edge surface (26) of the opening or recess of the light guiding element (25).

5. The luminaire according to Claim 4,
**characterized in**
**that** the lighting unit (50) projects on both sides beyond the light guiding element (25).

6. The luminaire according to any one of the preceding claims,
**characterized in**
**that** the cover is formed from a bidirectionally flexible textile material.

7. The luminaire according to any one of the preceding claims,
**characterized in**
**that** the profile element (30) has two grooves (31) extending preferably parallel to one another, in which two mutually opposite edge regions (14) of the opening (12) of the covering material (10) are fastened, in particular, are mounted with the aid of piping (15).

8. The luminaire according to any one of the preceding claims,
**characterized in**
**that** it is a pedant luminaire, wherein ropes (4) used for mounting the luminaire (1) are passed through openings in the covering material (10).

9. The luminaire according to any one of the preceding claims,
**characterized in**
**that** the lighting unit (50) has an emitter (60), the light exit opening (62) of which forms the light exit opening of the lighting unit (50).

10. The luminaire according to Claim 9,
**characterized in**
**that** the emitter (60) is adjustable, in particular is cardanically mounted.

11. The luminaire according to any one of the preceding claims,
**characterized in**
**that** said luminaire has a plurality of lighting units (50).

## Revendications

1. Luminaire (1) avec un élément conducteur de lumière (25) en forme de plaque ainsi qu'une unité d'éclairage (50) maintenu par l'élément conducteur de lumière (25), qui comprend une ouverture d'émission de lumière (62) prévue pour l'émission de la lumière de premiers moyens d'éclairage (65), qui est en surplomb par rapport à un plan (E) défini par l'élément conducteur de lumière (25), dans lequel l'unité d'éclairage (50) comprend en outre deux moyens d'éclairage pour l'introduction de lumière dans l'élément conducteur de lumière (25) et l'élément conducteur de lumière (25) est conçu pour l'émission de cette lumière sur au moins un côté plat,
**caractérisé en ce que**
un couvercle (10) du luminaire (1) est constitué d'un entoilage constitué d'un matériau flexible au moins partiellement transparent, dans lequel le matériau d'entoilage présente la forme d'une poche, est dimensionné, en ce qui concerne sa taille et est rabattu sur l'élément conducteur de lumière (25) et est fixé sur un côté arrière de l'élément conducteur de lumière (25), opposé au côté prévu pour l'émission de lumière, de façon à ce que le matériau d'entoilage s'appuie avec une traction contre la circonférence externe de la plaque de guidage de lumière (25) et recouvre globalement entièrement au moins le côté prévu pour l'émission de lumière de l'élément conducteur de lumière (25) ainsi que sa circonférence externe et
dans lequel le matériau d'entoilage en forme de poche comprend une ouverture (12) dont les bords (14) sont assemblés au niveau du côté arrière de l'élément conducteur de lumière (25) de façon à ce que le matériau d'entoilage entoure globalement entièrement l'élément conducteur de lumière (25) ainsi que l'unité d'éclairage (50) et
à l'arrière de l'élément conducteur de lumière (25), est disposé un élément profilé (30), de préférence allongé, au niveau duquel sont fixés les bords (14) de l'ouverture (12) du matériau d'entoilage (10).

2. Luminaire selon la revendication 1
**caractérisé en ce que**
l'élément conducteur de lumière (25) est en outre conçu pour émettre une partie de la lumière introduite par le bord.

3. Luminaire selon la revendication 1 ou 2
**caractérisé en ce que**
le matériau d'entoilage comprend une ouverture (11) correspondant à l'ouverture d'émission de lumière (62) de l'unité d'éclairage (50) et est fixé, sur le bord de l'ouverture d'émission de lumière (62), à l'unité d'éclairage (50).

4. Luminaire selon l'une des revendications précédentes,
**caractérisé en ce que**
l'élément conducteur de lumière (25) comprend une ouverture ou un évidement dans lequel est disposée l'unité d'éclairage (50),
dans lequel les deuxièmes moyens d'éclairage (90, 91) sont répartis sur la circonférence d'éléments de fixation de l'unité d'éclairage (50) et sont disposés de façon à être orientés vers une surface de bord (26) de l'ouverture resp. de l'évidement de l'élément conducteur de lumière (25).

5. Luminaire selon la revendication 4
**caractérisé en ce que**
l'unité d'éclairage (50) dépasse des deux côtés de l'élément conducteur de lumière (25).

6. Luminaire selon l'une des revendications précédentes,
**caractérisé en ce que**
le couvercle est constitué d'un matériau textile flexible bidirectionnel.

7. Luminaire selon l'une des revendications précédentes,
**caractérisé en ce que**
l'élément profilé (30) comprend deux rainures (31) de préférence parallèles, dans lesquelles sont fixés deux bords opposés (14) de l'ouverture (12) du matériau d'entoilage (10), plus particulièrement accrochés à l'aide de bourrelets (15).

8. Luminaire selon l'une des revendications précédentes,
**caractérisé en ce que**
il s'agit d'un luminaire suspendu, dans lequel les câbles (4) utilisés pour la suspension du luminaire (1) sont passés dans des ouvertures dans le matériau d'entoilage (10).

9. Luminaire selon l'une des revendications précédentes,
**caractérisé en ce que**
l'unité d'éclairage (50) comprend un projecteur (60) dont l'ouverture de sortie de lumière (62) constitue l'ouverture de sortie de lumière de l'unité d'éclairage (50).

10. Luminaire selon la revendication 9,
**caractérisé en ce que**
le projecteur (60) est monté de manière réglable, plus particulièrement avec un cardan.

11. Luminaire selon l'une des revendications précédentes,
**caractérisé en ce que**
celui-ci comprend plusieurs unités d'éclairage (50).
